# EUROPÄISCHE PATENTSCHRIFT

(11) **EP 2 875 318 B1**
(45) Veröffentlichungstag und Bekanntmachung des Hinweises auf die Patenterteilung: **10.10.2018**
(21) Anmeldenummer: 13762046.4
(22) Anmeldetag: 23.07.2013
(51) Int. Cl.: G01D 21/00

(54) **MESSGRÖSSENAUFNEHMER MIT INTERNEM DATENSPEICHER**
MEASUREMENT TRANSDUCER HAVING INTERNAL DATA MEMORY
CAPTEUR DE GRANDEURS DE MESURE À MÉMOIRE DE DONNÉES INTERNE

(30) Priorität: 23.07.2012 DE 102012014584
(43) Veröffentlichungstag der Anmeldung: 27.05.2015
(73) Patentinhaber: Hottinger Baldwin Messtechnik GmbH, 64293 Darmstadt (DE)
(72) Erfinder: HALLER, Markus, 64331 Weiterstadt (DE); KUNKEL, Ulrich, 64807 Dieburg (DE); VIEL, Wolfgang, 64297 Darmstadt (DE); WESSLER, Siegfried, 64289 Darmstadt (DE)
(74) Vertreter: Staudte, Ralph
(86) Internationale Anmeldenummer: PCT/DE2013/000399
(87) Internationale Veröffentlichungsnummer: WO 2014/015848

(56) Entgegenhaltungen:
- WO-A2-03/055032
- DE-A1-102006 023 232
- US-B1- 7 408 134

## Beschreibung

Die vorliegende Erfindung bezieht sich auf einen Messgrößenaufnehmer mit einem internen Datenspeicher, eine Verarbeitungsvorrichtung für einen derartigen Messgrößenaufnehmer und ein Verfahren zum Speichern von Daten in dem internen Datenspeicher eines derartigen Messgrößenaufnehmers.

Es sind Messgrößenaufnehmer mit einem Datenspeicher, in dem Kennwerte des Messgrößenaufnehmers gespeichert sind, bekannt. Beispielsweise ist aus der DE 101 30 215 B4 ein Messgrößenaufnehmer mit einem Datenspeichermodul bekannt. In dem Datenspeichermodul können Kennwerte gespeichert sein, wie sie sonst in einem separaten Datenblatt oder Kalibrierprotokoll festgehalten wären. Wird der Messgrößenaufnehmer mit einer Auswertevorrichtung verbunden, so können die in dem Datenspeichermodul gespeicherten Kennwerte zu der Auswertevorrichtung übertragen werden.

Weiterhin gab es in der Vergangenheit Bemühungen, Messgrößenaufnehmer mit einer sogenannten Plug&Measure-Technologie auszustatten. Diese sollte der sogenannten Plug&Play-Technologie entsprechen, mit deren Hilfe Computerzubehör wie eine Maus an einen Computer angeschlossen wird. Es wurde ein standardisiertes elektronisches Datenblatt für Messgrößenaufnehmer entwickelt, das sogenannte Transducer Electronic Data Sheet (TEDS) bzw. elektronische Sensordatenblatt. Es ist in dem Standard IEEE 1451.4 beschrieben und kann in einem EEPROM eines Messgrößenaufnehmers gespeichert sein. In ihm können beispielsweise Herstellerdaten, Modellnummer, Seriennummer, Messbereich und -empfindlichkeit sowie Kalibrierdaten enthalten sein.

Bei den bekannten Messgrößenaufnehmern mit einem Datenspeicher sind jeweils statische Daten in dem Datenspeicher gespeichert. Sie erfüllen die gleiche Funktion wie die sonst in einem separaten Datenblatt festgehaltenen Kennwerte, erlauben also eine Identifizierung eines Messgrößenaufnehmers und seiner Kalibrierung. Es ist jedoch nicht bekannt, in einem derartigen Datenspeicher auch dynamische Daten wie Prozessdaten eines Messgrößenaufnehmers zu speichern.

Bei Anwendungen, in denen Messgrößenaufnehmertechnik zum Einsatz kommt, besteht teilweise der Bedarf, Prozessdaten direkt in einem Messgrößenaufnehmer zu speichern. Dies trifft für den Bereich des Maschinenbaus und ebenso für andere technologische Gebiete zu.

Der Bedarf, Prozessdaten direkt in einem Messgrößenaufnehmer zu speichern, kann z. B. bei dem Hersteller des Messgrößenaufnehmers oder - falls kein Direktvertrieb an Endanwender stattfindet - dem Verkäufer desselben bestehen. Auch ein Endanwender kann einen derartigen Bedarf haben.

Es ist daher die Aufgabe der Erfindung, einen Messgrößenaufnehmer mit einem internen Datenspeicher, eine Verarbeitungsvorrichtung für einen derartigen Messgrößenaufnehmer und ein Verfahren zum Speichern von Daten in dem internen Datenspeicher eines derartigen Messgrößenaufnehmers bereitzustellen, mit denen ein Speichern von im laufenden Betrieb des Messgrößenaufnehmers anfallenden Prozessdaten direkt in dem Messgrößenaufnehmer möglich ist. Die Daten sollen im laufenden Betrieb und auch nach einem Ausbau des Messgrößenaufnehmers aus einer Messanordnung, in der er verwendet wird, auslesbar sein.

Diese Aufgabe wird mit dem Verfahren nach dem Anspruch 1, der Verarbeitungsvorrichtung nach dem Anspruch 6, dem Messgrößenaufnehmer nach dem Anspruch 11 und dem Messsystem nach dem Anspruch 16 gelöst.

Gemäß einer ersten Ausgestaltung der Erfindung wird ein Verfahren zum Speichern von Daten in einem internen Datenspeicher eines Messgrößenaufnehmers bereitgestellt. Das Verfahren umfasst einen Schritt des Bestimmens, in welchen Messwertbereich einer Vielzahl von Messwertbereichen ein Messwert des Messgrößenaufnehmers fällt, einen Schritt des Veränderns eines dem bestimmten Messwertbereich entsprechenden Zählwerts um einen vorbestimmten Wert und einen Schritt des Speicherns des veränderten Zählwerts in einem entsprechenden Speicherbereich von zumindest zwei Speicherbereichen einer Vielzahl von Speicherbereichen des internen Datenspeichers des Messgrößenaufnehmers.

Diese Schritte können im laufenden Prozess ausgeführt werden. Somit ermöglichen sie ein Speichern von im laufenden Betrieb des Messgrößenaufnehmers anfallenden Prozessdaten, nämlich den Zählwerten, direkt in dem Messgrößenaufnehmer.

Die in dem internen Datenspeicher des Messgrößenaufnehmers gespeicherten Zählwerte können dem Messgrößenaufnehmer und damit einem Anwender direkt zugeordnet werden. Dadurch kann es nicht mehr zu Verwechslungen kommen. Es werden keine zusätzlichen Speichermöglichkeiten außerhalb des Messgrößenaufnehmers wie beispielsweise in einer externen Folgeelektronik oder einer globalen Datenbank eines Herstellers des Messgrößenaufnehmers benötigt. Somit kann der Aufwand für derartige zusätzliche Speichermöglichkeiten gespart werden. Zudem können die Zählwerte nicht durch den Anwender manipuliert werden, da das Schreiben der Zählwerte in den internen Datenspeicher nur mit Hilfe einer speziellen Funktionalität möglich ist und der Anwender keinen Zugriff auf selbige hat.

Gemäß einer auf der ersten Ausgestaltung basierenden zweiten Ausgestaltung der Erfindung umfasst das Verfahren einen Schritt des Auslesens der in den zumindest zwei Speicherbereichen gespeicherten Zählwerte und einen Schritt des Übertragens der ausgelesenen Zählwerte zu einer Verarbeitungsvorrichtung.

Die Zählwerte können im laufenden Prozess und auch nach einem Ausbau des Messgrößenaufnehmers aus einer Messanordnung, in der er verwendet wird, ausgelesen werden. Je nachdem kann die Verarbeitungsvorrichtung zu der Messanordnung gehören oder z. B. Teil einer Prüf- oder Analyseanordnung sein. Somit können sowohl der Anwender als auch der Hersteller oder ein Verkäufer des Messgrößenaufnehmers die Zählwerte auslesen und aus ihrer Analyse beispielsweise Rückschlüsse auf die noch zu erwartende Lebensdauer und/oder Messgenauigkeit des Messgrößenaufnehmers ziehen. Der Hersteller oder Verkäufer kann darüber hinaus anhand der Belastung und insbesondere Überlastung des Messgrößenaufnehmers durch den Anwender beurteilen, ob Gewährleistungsansprüche des Anwenders wegen eines Defekts des Messgrößenaufnehmers berechtigt sind oder nicht.

Gemäß einer auf einer der vorhergehenden Ausgestaltungen basierenden dritten Ausgestaltung der Erfindung beginnt ein erster Messwertbereich der Vielzahl von Messwertbereichen bei einem Messwert, der 50 % des zulässigen maximalen Messwerts beträgt. Weitere Messwertbereiche der Vielzahl von Messwertbereichen beginnen jeweils bei einem größeren Messwert als der erste Messwertbereich.

Nicht nur Messwerte oberhalb des zulässigen maximalen Messwerts, sondern auch Messwerte, die zwar unterhalb von ihm aber am oberen Ende eines gesamten zulässigen Messbereichs liegen, haben einen größeren Einfluss auf die Lebensdauer und die Messgenauigkeit des Messgrößenaufnehmers als Messwerte am unteren Ende oder in der Mitte des gesamten zulässigen Messbereichs. Sie ebenfalls zu erfassen kann genauere Rückschlüsse auf die noch zu erwartende Lebensdauer und/oder Messgenauigkeit des Messgrößenaufnehmers erlauben.

Gemäß einer auf einer der vorhergehenden Ausgestaltungen basierenden vierten Ausgestaltung der Erfindung sind zumindest fünf Messwertbereiche und entsprechende Speicherbereiche vorgesehen.

Durch eine feinere Staffelung der Messwertbereiche kann die Genauigkeit von Rückschlüssen auf die noch zu erwartende Lebensdauer und/oder Messgenauigkeit des Messgrößenaufnehmers gesteigert werden.

Gemäß einer auf einer der vorhergehenden Ausgestaltungen basierenden fünften Ausgestaltung der Erfindung beginnt ein erster Messwertbereich der Vielzahl von Messwertbereichen bei einem Messwert, der 50 % des zulässigen maximalen Messwerts beträgt. Ein zweiter Messwertbereich der Vielzahl von Messwertbereichen beginnt bei einem Messwert, der 75 % des zulässigen maximalen Messwerts beträgt. Ein dritter Messwertbereich der Vielzahl von Messwertbereichen beginnt bei einem Messwert, der 100 % des zulässigen maximalen Messwerts beträgt. Ein vierter Messwertbereich der Vielzahl von Messwertbereichen beginnt bei einem Messwert, der 110 % des zulässigen maximalen Messwerts beträgt. Ein fünfter Messwertbereich der Vielzahl von Messwertbereichen beginnt bei einem Messwert, der 120 % des zulässigen maximalen Messwerts beträgt. Ein sechster Messwertbereich der Vielzahl von Messwertbereichen beginnt bei einem Messwert, der 130 % des zulässigen maximalen Messwerts beträgt.

Mit dieser speziellen Konfiguration der Messwertbereiche sind besonders genaue Rückschlüsse auf die noch zu erwartende Lebensdauer und/oder Messgenauigkeit des Messgrößenaufnehmers möglich.

Gemäß einer sechsten Ausgestaltung der Erfindung wird eine Verarbeitungsvorrichtung für einen Messgrößenaufnehmer mit einem internen Datenspeicher bereitgestellt. Die Verarbeitungsvorrichtung umfasst eine Verarbeitungseinrichtung zum Verarbeiten eines elektrischen Messsignals von dem Messgrößenaufnehmer und Erzeugen eines entsprechenden Messwerts und eine erste Übertragungseinrichtung zum Übertragen von elektrischen Signalen. Die Verarbeitungseinrichtung ist dazu eingerichtet, zu bestimmen, in welchen Messwertbereich einer Vielzahl von Messwertbereichen der Messwert fällt, einen dem bestimmten Messwertbereich entsprechenden Zählwert um einen vorbestimmten Wert zu verändern und den veränderten Zählwert in einem entsprechenden Speicherbereich von zumindest zwei Speicherbereichen einer Vielzahl von Speicherbereichen des internen Datenspeichers des Messgrößenaufnehmers zu speichern. Die erste Übertragungseinrichtung ist dazu eingerichtet, den veränderten Zählwert zu dem Messgrößenaufnehmer zu übertragen.

Dies ermöglicht ein Speichern von im laufenden Betrieb des Messgrößenaufnehmers anfallenden Prozessdaten, nämlich den Zählwerten, direkt in dem Messgrößenaufnehmer. Die in dem internen Datenspeicher des Messgrößenaufnehmers gespeicherten Zählwerte können dem Messgrößenaufnehmer und damit einem Anwender direkt zugeordnet werden. Dadurch kann es nicht mehr zu Verwechslungen kommen. Es werden keine zusätzlichen Speichermöglichkeiten außerhalb des Messgrößenaufnehmers wie beispielsweise in einer externen Folgeelektronik oder einer globalen Datenbank eines Herstellers des Messgrößenaufnehmers benötigt. Somit kann der Aufwand für derartige zusätzliche Speichermöglichkeiten gespart werden. Zudem können die Zählwerte nicht durch den Anwender manipuliert werden, da das Schreiben der Zählwerte in den internen Datenspeicher nur mit Hilfe einer speziellen Funktionalität möglich ist und der Anwender keinen Zugriff auf selbige hat.

Gemäß einer auf der sechsten Ausgestaltung basierenden siebten Ausgestaltung der Erfindung ist die Verarbeitungseinrichtung dazu eingerichtet, die in den zumindest zwei Speicherbereichen gespeicherten Zählwerte auszulesen. Die erste Übertragungseinrichtung ist dazu eingerichtet, die ausgelesenen Zählwerte zu empfangen.

Die Zählwerte können im laufenden Prozess und auch nach einem Ausbau des Messgrößenaufnehmers aus einer Messanordnung, in der er verwendet wird, ausgelesen werden. Somit können sowohl der Anwender als auch der Hersteller oder ein Verkäufer des Messgrößenaufnehmers die Zählwerte auslesen und aus ihrer Analyse beispielsweise Rückschlüsse auf die noch zu erwartende Lebensdauer und/oder Messgenauigkeit des Messgrößenaufnehmers ziehen. Der Hersteller oder Verkäufer kann darüber hinaus anhand der Belastung und insbesondere Überlastung des Messgrößenaufnehmers durch den Anwender beurteilen, ob Gewährleistungsansprüche des Anwenders wegen eines Defekts des Messgrößenaufnehmers berechtigt sind oder nicht.

Gemäß einer auf der sechsten oder siebten Ausgestaltung basierenden achten Ausgestaltung der Erfindung beginnt ein erster Messwertbereich der Vielzahl von Messwertbereichen bei einem Messwert, der 50 % des zulässigen maximalen Messwerts beträgt. Weitere Messwertbereiche der Vielzahl von Messwertbereichen beginnen jeweils bei einem größeren Messwert als der erste Messwertbereich.

Nicht nur Messwerte oberhalb des zulässigen maximalen Messwerts, sondern auch Messwerte, die zwar unterhalb von ihm aber am oberen Ende eines gesamten zulässigen Messbereichs liegen, haben einen größeren Einfluss auf die Lebensdauer und die Messgenauigkeit des Messgrößenaufnehmers als Messwerte am unteren Ende oder in der Mitte des gesamten zulässigen Messbereichs. Sie ebenfalls zu erfassen kann genauere Rückschlüsse auf die noch zu erwartende Lebensdauer und/oder Messgenauigkeit des Messgrößenaufnehmers erlauben.

Gemäß einer auf einer der sechsten bis achten Ausgestaltungen basierenden neunten Ausgestaltung der Erfindung sind zumindest fünf Messwertbereiche und entsprechende Speicherbereiche vorgesehen.

Durch eine feinere Staffelung der Messwertbereiche kann die Genauigkeit von Rückschlüssen auf die noch zu erwartende Lebensdauer und/oder Messgenauigkeit des Messgrößenaufnehmers gesteigert werden.

Gemäß einer auf einer der sechsten bis neunten Ausgestaltungen basierenden zehnten Ausgestaltung der Erfindung beginnt ein erster Messwertbereich der Vielzahl von Messwertbereichen bei einem Messwert, der 50 % des zulässigen maximalen Messwerts beträgt. Ein zweiter Messwertbereich der Vielzahl von Messwertbereichen beginnt bei einem Messwert, der 75 % des zulässigen maximalen Messwerts beträgt. Ein dritter Messwertbereich der Vielzahl von Messwertbereichen beginnt bei einem Messwert, der 100 % des zulässigen maximalen Messwerts beträgt. Ein vierter Messwertbereich der Vielzahl von Messwertbereichen beginnt bei einem Messwert, der 110 % des zulässigen maximalen Messwerts beträgt. Ein fünfter Messwertbereich der Vielzahl von Messwertbereichen beginnt bei einem Messwert, der 120 % des zulässigen maximalen Messwerts beträgt. Ein sechster Messwertbereich der Vielzahl von Messwertbereichen beginnt bei einem Messwert, der 130 % des zulässigen maximalen Messwerts beträgt.

Mit dieser speziellen Konfiguration der Messwertbereiche sind besonders genaue Rückschlüsse auf die noch zu erwartende Lebensdauer und/oder Messgenauigkeit des Messgrößenaufnehmers möglich.

Gemäß einer elften Ausgestaltung der Erfindung wird ein Messsystem mit einer Verarbeitungsvorrichtung nach einer der sechsten bis zehnten Ausgestaltungen und einem Messgrößenaufnehmer bereitgestellt. Der Messgrößenaufnehmer umfasst eine Aufnehmereinrichtung zum Erzeugen eines einem Wert einer physikalischen Größe entsprechenden elektrischen Messsignals und einen internen Datenspeicher zum Speichern von Daten. Der interne Datenspeicher weist eine Vielzahl von Speicherbereichen auf und ist dazu eingerichtet, in zumindest zwei Speicherbereichen der Vielzahl von Speicherbereichen jeweils einen Zählwert, der einer Häufigkeit eines Auftretens von Messwerten in einem bestimmten Messwertbereich entspricht, zu speichern. Ein Verfahren nach einer der ersten bis fünften Ausgestaltungen dient zum Zugriff auf den internen Datenspeicher des Messgrößenaufnehmers.

Dies ermöglicht ein Speichern von im laufenden Betrieb des Messgrößenaufnehmers anfallenden Prozessdaten, nämlich den Zählwerten, direkt in dem Messgrößenaufnehmer. Die in dem internen Datenspeicher des Messgrößenaufnehmers gespeicherten Zählwerte können dem Messgrößenaufnehmer und damit einem Anwender direkt zugeordnet werden. Dadurch kann es nicht mehr zu Verwechslungen kommen. Es werden keine zusätzlichen Speichermöglichkeiten außerhalb des Messgrößenaufnehmers wie beispielsweise in einer externen Folgeelektronik oder einer globalen Datenbank eines Herstellers des Messgrößenaufnehmers benötigt. Somit kann der Aufwand für derartige zusätzliche Speichermöglichkeiten gespart werden. Zudem können die Zählwerte nicht durch den Anwender manipuliert werden, da das Schreiben der Zählwerte in den internen Datenspeicher nur mit Hilfe einer speziellen Funktionalität möglich ist und der Anwender keinen Zugriff auf selbige hat.

Gemäß einer auf der elften Ausgestaltung basierenden zwölften Ausgestaltung der Erfindung umfasst der Messgrößenaufnehmer eine zweite Übertragungseinrichtung zum Übertragen von elektrischen Signalen, die dazu eingerichtet ist, die in den zumindest zwei Speicherbereichen gespeicherten Zählwerte zu einer Verarbeitungsvorrichtung zu übertragen.

Die Zählwerte können im laufenden Prozess und auch nach einem Ausbau des Messgrößenaufnehmers aus einer Messanordnung, in der er verwendet wird, ausgelesen werden. Somit können sowohl der Anwender als auch der Hersteller oder ein Verkäufer des Messgrößenaufnehmers die Zählwerte auslesen und aus ihrer Analyse beispielsweise Rückschlüsse auf die noch zu erwartende Lebensdauer und/oder Messgenauigkeit des Messgrößenaufnehmers ziehen. Der Hersteller oder Verkäufer kann darüber hinaus anhand der Belastung und insbesondere Überlastung des Messgrößenaufnehmers durch den Anwender beurteilen, ob Gewährleistungsansprüche des Anwenders wegen eines Defekts des Messgrößenaufnehmers berechtigt sind oder nicht.

Gemäß einer auf der elften oder zwölften Ausgestaltung basierenden dreizehnten Ausgestaltung der Erfindung beginnt ein erster Messwertbereich der Vielzahl von Messwertbereichen bei einem Messwert, der 50 % des zulässigen maximalen Messwerts beträgt. Weitere Messwertbereiche der Vielzahl von Messwertbereichen beginnen jeweils bei einem größeren Messwert als der erste Messwertbereich.

Nicht nur Messwerte oberhalb des zulässigen maximalen Messwerts, sondern auch Messwerte, die zwar unterhalb von ihm aber am oberen Ende eines gesamten zulässigen Messbereichs liegen, haben einen größeren Einfluss auf die Lebensdauer und die Messgenauigkeit des Messgrößenaufnehmers als Messwerte am unteren Ende oder in der Mitte des gesamten zulässigen Messbereichs. Sie ebenfalls zu erfassen kann genauere Rückschlüsse auf die noch zu erwartende Lebensdauer und/oder Messgenauigkeit des Messgrößenaufnehmers erlauben.

Gemäß einer auf einer der elften bis dreizehnten Ausgestaltungen basierenden vierzehnten Ausgestaltung der Erfindung sind zumindest fünf Messwertbereiche und entsprechende Speicherbereiche vorgesehen.

Durch eine feinere Staffelung der Messwertbereiche kann die Genauigkeit von Rückschlüssen auf die noch zu erwartende Lebensdauer und/oder Messgenauigkeit des Messgrößenaufnehmers gesteigert werden.

Gemäß einer auf einer der elften bis vierzehnten Ausgestaltungen basierenden fünfzehnten Ausgestaltung der Erfindung beginnt ein erster Messwertbereich der Vielzahl von Messwertbereichen bei einem Messwert, der 50 % des zulässigen maximalen Messwerts beträgt. Ein zweiter Messwertbereich der Vielzahl von Messwertbereichen beginnt bei einem Messwert, der 75 % des zulässigen maximalen Messwerts beträgt. Ein dritter Messwertbereich der Vielzahl von Messwertbereichen beginnt bei einem Messwert, der 100 % des zulässigen maximalen Messwerts beträgt. Ein vierter Messwertbereich der Vielzahl von Messwertbereichen beginnt bei einem Messwert, der 110 % des zulässigen maximalen Messwerts beträgt. Ein fünfter Messwertbereich der Vielzahl von Messwertbereichen beginnt bei einem Messwert, der 120 % des zulässigen maximalen Messwerts beträgt. Ein sechster Messwertbereich der Vielzahl von Messwertbereichen beginnt bei einem Messwert, der 130 % des zulässigen maximalen Messwerts beträgt.

Mit dieser speziellen Konfiguration der Messwertbereiche sind besonders genaue Rückschlüsse auf die noch zu erwartende Lebensdauer und/oder Messgenauigkeit des Messgrößenaufnehmers möglich.

Mit dem Messsystem können die vorstehend bereits im Zusammenhang mit seinen Bestandteilen beschriebenen Vorteile erreicht werden.

Die Erfindung wird nachfolgend anhand eines Ausführungsbeispiels in Verbindung mit einer schematischen Zeichnung näher erläutert. Es zeigen:
Fig. 1 ein Blockschaltbild eines beispielhaften Messsystems; und
Fig. 2 ein Flussdiagramm, das die grundlegenden Schritte eines beispielhaften Verfahrens zum Speichern von Daten in einem internen Datenspeicher eines Messgrößenaufnehmers veranschaulicht.

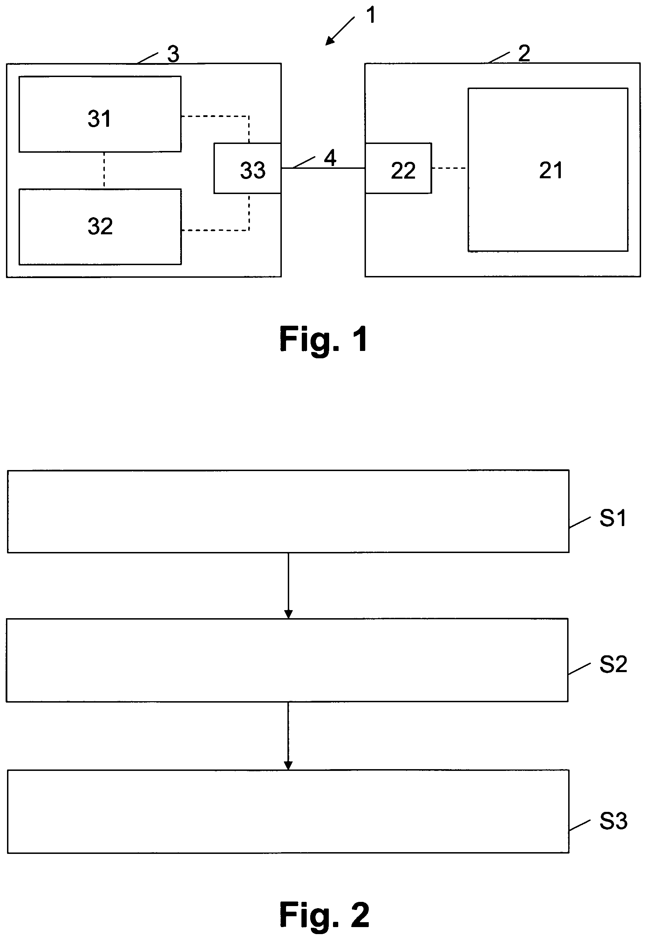

Die Fig. 1 zeigt ein Blockschaltbild eines beispielhaften Messsystems 1. Dieses umfasst eine Verarbeitungsvorrichtung 2 und einen auch als Sensor bezeichneten Messgrößenaufnehmer 3, die über eine Verbindung 4 miteinander verbunden sind. Die Verarbeitungsvorrichtung 2 weist eine Verarbeitungseinrichtung 21 und eine erste Übertragungseinrichtung 22 auf, während der Messgrößenaufnehmer 3 eine Aufnehmereinrichtung 31, einen internen Datenspeicher 32 und eine zweite Übertragungseinrichtung 33 aufweist.

Bei der Verarbeitungsvorrichtung 2 kann es sich beispielsweise um einen Messverstärker, einen Computer oder eine andere Folgeelektronik handeln. Je nachdem, wie die Verarbeitungsvorrichtung 2 ausgebildet ist, können die Verarbeitungseinrichtung 21 und die erste Übertragungseinrichtung 22 integrierte oder diskrete Elemente sein. Sie können beispielsweise beide als Bestandteil eines integrierten Schaltkreises eines Messverstärkers realisiert sein. Je nachdem, wie die Verarbeitungseinrichtung 21 und die erste Übertragungseinrichtung 22 realisiert sind, kann die in Fig. 1 symbolisch dargestellte Verbindung zwischen ihnen als weiteres Element vorhanden sein oder auch nicht.

Der Messgrößenaufnehmer 3 kann ein passiver Messgrößenaufnehmer sein, d. h. ein Messgrößenaufnehmer ohne Signalverstärkung. Er kann beispielsweise ein Kraftaufnehmer, ein Drehmomentaufnehmer, ein Druckaufnehmer, ein Wegaufnehmer, ein Dehnungsaufnehmer, ein Temperaturaufnehmer, ein Feuchtigkeitsaufnehmer oder ein beliebiger anderer Aufnehmer sein. Je nachdem, welche Messgröße erfasst werden soll, erfasst seine Aufnehmereinrichtung 31 die gewünschte Messgröße basierend auf einem physikalischen oder chemischen Effekt und formt sie in eine weiterverarbeitbare Größe um, wobei es sich in diesem Fall um ein elektrisches Messsignal handelt. Die Aufnehmereinrichtung 31 kann beispielsweise DMS (Dehnungsmessstreifen) zur Umformung der Messgröße in ein elektrisches Signal nutzen. Dabei können die DMS in einer als Vollbrücke, Halbbrücke oder Viertelbrücke geschalteten Wheatstone'schen Brücke integriert sein. Beispielsweise kann der Messgrößenaufnehmer 3 ein Druckaufnehmer sein und seine Aufnehmereinrichtung 31 mit als Vollbrücke geschalteten DMS versehen sein.

Der interne Datenspeicher 32 und die zweite Übertragungseinrichtung 33 des Messgrößenaufnehmers 3 können separate Elemente oder miteinander und/oder mit der Aufnehmereinrichtung 31 integriert sein. Je nachdem, wie die Aufnehmereinrichtung 31, der interne Datenspeicher 32 und die zweite Übertragungseinrichtung 33 realisiert sind, können die in Fig. 1 symbolisch dargestellten Verbindungen zwischen ihnen als weitere Elemente vorhanden sein oder auch nicht.

Bei dem internen Datenspeicher 32 kann es sich um einen ohnehin bereits in dem Messgrößenaufnehmer 3 vorhandenen Speicher oder um einen eigens bereitgestellten Speicher handeln. In dem ersteren Fall kann z. B. ein elektronisches Datenblatt nach dem Standard IEEE 1451.4 bzw. ein EEPROM oder anderes Speichermedium, in dem dieses gespeichert ist, als der interne Datenspeicher 32 verwendet werden. Mit anderen Worten kann der interne Datenspeicher 32 ein TEDS bzw. das Speichermedium, in dem es gespeichert ist, sein.

Als Verbindung 4 kommen verschiedene Anschlüsse in Betracht. Ist die Aufnehmereinrichtung 31 DMS-basiert, so kann die Aufnehmereinrichtung 31 bzw. der Messgrößenaufnehmer 3 z. B. in 6-Leiter-Technik angeschlossen sein und somit die Verbindung 4 als Kabel mit sechs Adern ausgebildet sein. Auch ein Anschluss in 3-Leiter- oder 4-Leiter-Technik ist möglich.

Während eines Messbetriebs wird jeweils ein elektrisches Messsignal, das einem Wert einer durch die Aufnehmereinrichtung 31 erfassten Messgröße entspricht, über die zweite Übertragungseinrichtung 33 und die Verbindung 4 zu der ersten Übertragungseinrichtung 22 der Verarbeitungsvorrichtung 2 übertragen. Die Verarbeitungseinrichtung 21 der Verarbeitungsvorrichtung 2 verarbeitet das von der ersten Übertragungseinrichtung 22 empfangene elektrische Messsignal und erzeugt einen entsprechenden Messwert. Die Verarbeitung kann eine Verstärkung des elektrischen Messsignals umfassen.

Daraufhin bestimmt die Verarbeitungseinrichtung 21, in welchen Messwertbereich einer Vielzahl von Messwertbereichen der erzeugte Messwert fällt und verändert einen dem bestimmten Messwertbereich entsprechenden Zählwert um einen vorbestimmten Wert. Beispielsweise kann der Zählwert um eins oder einen anderen Wert erhöht oder verringert werden. Dabei kann ein Anfangswert des Zählwerts frei gewählt werden. Wird der Zählwert erhöht, kann sein Anfangswert beispielsweise auf null gesetzt werden. Wird der Zählwert verringert, kann sein Anfangswert z. B. derart eingestellt werden, dass der Zählwert dann, wenn er bis auf null verringert worden ist, einen Anhaltspunkt für ein erwartetes Ende der Lebensdauer des Messgrößenaufnehmers 3 liefert.

Der veränderte Zählwert wird über die erste Übertragungseinrichtung 22 und die Verbindung 4 zu der zweiten Übertragungseinrichtung 33 übertragen und in einem entsprechenden Speicherbereich des internen Datenspeichers 32 des Messgrößenaufnehmers 3 gespeichert. Dabei sind zumindest zwei Messwertbereiche und entsprechende Speicherbereiche des internen Datenspeichers 32 für die Speicherung von Zählwerten vorgesehen. Der interne Datenspeicher 32 kann darüber hinaus noch weitere Speicherbereiche für andere Zwecke aufweisen.

Es wird somit jeweils eine Häufigkeit eines Auftretens von Messwerten in einem bestimmten Messwertbereich in einem entsprechenden Speicherbereich des internen Datenspeichers 32 gespeichert. Mit anderen Worten werden Belastungskollektive direkt in dem Messgrößenaufnehmer 3 und nicht in einem externen Speichermedium gespeichert. Dabei kann der Messgrößenaufnehmer 3 ein passiver Messgrößenaufnehmer sein, d. h. ein Messgrößenaufnehmer ohne Signalverstärkung und dafür vorgesehene Elektronik.

Die vorstehend beschriebene Funktionalität kann bereits bei der Herstellung der Verarbeitungsvorrichtung 2 vorgesehen werden. Sie kann jedoch auch zu einem späteren Zeitpunkt nachgerüstet werden. Sie kann beispielsweise über eine entsprechende Funktionalität in einer Firmware der Verarbeitungsvorrichtung 2 realisiert werden, wobei diese Firmware auch noch zu einem späteren Zeitpunkt eingespielt und so die Funktionalität nachgerüstet werden kann. Dabei kann die Firmware beispielsweise in einem nicht in Fig. 1 gezeigten EEPROM der Verarbeitungsvorrichtung 2 gespeichert sein.

Die Messwertbereiche und die entsprechenden Speicherbereiche des internen Datenspeichers 32 sind prinzipiell frei wählbar. Von besonderem Interesse sind Messwertbereiche, die zwar unterhalb eines zulässigen maximalen Messwerts aber am oberen Ende eines gesamten zulässigen Messbereichs liegen, und Messwertbereiche oberhalb des zulässigen maximalen Messwerts. In derartige Messwertbereiche fallende Messwerte haben einen größeren Einfluss auf die Lebensdauer und die Messgenauigkeit des Messgrößenaufnehmers 3 als Messwerte am unteren Ende oder in der Mitte des gesamten zulässigen Messbereichs. Beispielhafte Konfigurationen stellen sich dar wie folgt.

Bei einer ersten Konfiguration beginnt ein erster Messwertbereich bei einem Messwert, der 50 %, 55 %, 60 %, 65 %, 70 %, 75 %, 80 %, 85 %, 90 % oder 95 % des zulässigen maximalen Messwerts beträgt. Ein zweiter Messwertbereich beginnt bei einem Messwert, der 100 % des zulässigen maximalen Messwerts beträgt. Der erste Messwertbereich kann sich bis zum Beginn des zweiten Messwertbereichs erstrecken, nicht bis zu ihm erstrecken oder darüber hinausgehen.

Bei einer zweiten Konfiguration beginnt ein erster Messwertbereich bei einem Messwert, der 85 % des zulässigen maximalen Messwerts beträgt. Ein zweiter Messwertbereich beginnt bei einem Messwert, der 100 % des zulässigen maximalen Messwerts beträgt. Ein dritter Messwertbereich beginnt bei einem Messwert, der 115 % des zulässigen maximalen Messwerts beträgt. Der erste Messwertbereich kann sich bis zum Beginn des zweiten Messwertbereichs erstrecken, nicht bis zu ihm erstrecken oder darüber hinausgehen. Der zweite Messwertbereich kann sich bis zum Beginn des dritten Messwertbereichs erstrecken, nicht bis zu ihm erstrecken oder darüber hinausgehen.

Bei einer dritten Konfiguration beginnt ein erster Messwertbereich bei einem Messwert, der 90 % des zulässigen maximalen Messwerts beträgt. Ein zweiter Messwertbereich beginnt bei einem Messwert, der 100 % des zulässigen maximalen Messwerts beträgt. Ein dritter Messwertbereich beginnt bei einem Messwert, der 110 % des zulässigen maximalen Messwerts beträgt. Ein vierter Messwertbereich beginnt bei einem Messwert, der 120 % des zulässigen maximalen Messwerts beträgt. Ein fünfter Messwertbereich beginnt bei einem Messwert, der 130 % des zulässigen maximalen Messwerts beträgt. Jeder der Messwertbereiche kann sich bis zum Beginn des auf ihn folgenden Messwertbereichs erstrecken, nicht bis zu ihm erstrecken oder darüber hinausgehen.

Zahlreiche weitere Konfigurationen sind denkbar. So können z. B. größere Messwertbereiche verwendet werden. Beispielsweise kann ein erster Messwertbereich bei einem Messwert, der 75 % des zulässigen maximalen Messwerts beträgt, ein zweiter Messwertbereich bei einem Messwert, der 100 % des zulässigen maximalen Messwerts beträgt, und ein dritter Messwertbereich bei einem Messwert, der 125 % des zulässigen maximalen Messwerts beträgt, beginnen. Oder ein erster Messwertbereich kann bei einem Messwert, der 100 % des zulässigen maximalen Messwerts beträgt, ein zweiter Messwertbereich bei einem Messwert, der 150 % des zulässigen maximalen Messwerts beträgt, und ein dritter Messwertbereich bei einem Messwert, der 200 % des zulässigen maximalen Messwerts beträgt, beginnen.

Es können aber auch kleinere Messwertbereiche verwendet werden. Beispielsweise kann ein erster Messwertbereich bei einem Messwert, der 85 % des zulässigen maximalen Messwerts beträgt, ein zweiter Messwertbereich bei einem Messwert, der 90 % des zulässigen maximalen Messwerts beträgt, ein dritter Messwertbereich bei einem Messwert, der 95 % des zulässigen maximalen Messwerts beträgt, ein vierter Messwertbereich bei einem Messwert, der 100 % des zulässigen maximalen Messwerts beträgt, ein fünfter Messwertbereich bei einem Messwert, der 105 % des zulässigen maximalen Messwerts beträgt, ein sechster Messwertbereich bei einem Messwert, der 110 % des zulässigen maximalen Messwerts beträgt, ein siebter Messwertbereich bei einem Messwert, der 115 % des zulässigen maximalen Messwerts beträgt, usw. beginnen.

Zudem können Messwertbereiche verwendet werden, die nicht alle die gleiche Größe aufweisen. So kann z. B. ein erster Messwertbereich bei einem Messwert, der 50 % des zulässigen maximalen Messwerts beträgt, ein zweiter Messwertbereich bei einem Messwert, der 75 % des zulässigen maximalen Messwerts beträgt, ein dritter Messwertbereich bei einem Messwert, der 100 % des zulässigen maximalen Messwerts beträgt, ein vierter Messwertbereich bei einem Messwert, der 110 % des zulässigen maximalen Messwerts beträgt, ein fünfter Messwertbereich bei einem Messwert, der 120 % des zulässigen maximalen Messwerts beträgt, und ein sechster Messwertbereich bei einem Messwert, der 130 % des zulässigen maximalen Messwerts beträgt, beginnen. Darüber hinaus kann ein erster Messwertbereich auch bereits bei einem kleineren Messwert wie z. B. einem Messwert, der 10 % des zulässigen maximalen Messwerts beträgt, beginnen und so beispielsweise auch der gesamte zulässige Messbereich abgedeckt werden.

Beliebige Unterkombinationen der vorstehend genannten Messwertbereiche oder anderer Messwertbereiche sind denkbar. Die Messwertbereiche können auch bei nicht explizit genannten Werten wie z. B. einem Messwert, der 91 % des zulässigen maximalen Messwerts beträgt, einem Messwert, der 102 % des zulässigen maximalen Messwerts beträgt, einem Messwert, der 108 % des zulässigen maximalen Messwerts beträgt, einem Messwert, der 133 % des zulässigen maximalen Messwerts beträgt, einem Messwert, der 220 % des zulässigen maximalen Messwerts beträgt, usw. beginnen.

Bei den verschiedenen Konfigurationen kann sich jeweils jeder der Messwertbereiche bis zum Beginn des auf ihn folgenden Messwertbereichs erstrecken, nicht bis zu ihm erstrecken oder darüber hinausgehen. Die Auswahl einer passenden Konfiguration kann unter Berücksichtigung von bei einer bestimmten Anwendung zu erwartenden Messwerten erfolgen. Sie ist prinzipiell nur durch die Größe des internen Datenspeichers 32 bzw. die Größe des gesamten für eine Speicherung von Zählwerten verfügbaren Speicherbereichs des internen Datenspeichers 32 begrenzt.

Die in den verschiedenen Speicherbereichen des internen Datenspeichers 32 gespeicherten Zählwerte können bei Bedarf einzeln oder insgesamt ausgelesen werden. Dies kann im laufenden Betrieb des Messgrößenaufnehmers 3 bei einem Anwender desselben erfolgen. In diesem Fall können die Zählwerte über die zweite Übertragungseinrichtung 33 und die Verbindung 4 zu der ersten Übertragungseinrichtung 22 übertragen werden, wobei das Auslesen von der Verarbeitungseinrichtung 21 durchgeführt werden kann. Dabei kann die Übertragung der Zählwerte über auch für eine Übertragung von elektrischen Messsignalen verwendete Adern der Verbindung 4 erfolgen. Der Anwender kann die ausgelesenen Zählwerte analysieren, wobei die Analyseergebnisse z. B. Rückschlüsse auf die noch zu erwartende Lebensdauer und/oder Messgenauigkeit des Messgrößenaufnehmers 3 erlauben können.

Generell können das Schreiben von Zählwerten oder anderen Daten in den internen Datenspeicher 32 des Messgrößenaufnehmers 3 und das Lesen von Zählwerten oder anderen Daten aus ihm bzw. die Übertragung dieser Zählwerte oder anderen Daten mittels verschiedener Übertragungstechnologien realisiert werden. So kann dabei auf eine zusätzliche Ader im Kabel der Verbindung 4 verzichtet werden ("zero wire"). Die Übertragung kann jedoch auch mittels einer derartigen zusätzlichen Ader im Kabel ("one wire") oder kabellos ("no wire") erfolgen. Letzteres kann z. B. mit Hilfe von RFID-Technologie ("radio-frequency identification" bzw. "Identifizierung mit Hilfe elektromagnetischer Wellen") implementiert werden.

Die in den verschiedenen Speicherbereichen des internen Datenspeichers 32 gespeicherten Zählwerte können auch nach einem Ausbau des Messgrößenaufnehmers 3 aus einer Messanordnung, in der er verwendet wird, ausgelesen werden. Beispielsweise können die Zählwerte bei einem Hersteller oder Verkäufer des Messgrößenaufnehmers 3 mit Hilfe einer entsprechenden Folgeelektronik, die z. B. Teil einer Prüf- oder Analyseanordnung sein kann, ausgelesen werden. Der Hersteller oder Verkäufer kann dann die ausgelesenen Zählwerte analysieren, um beispielsweise festzustellen, in welchem Ausmaß der Messgrößenaufnehmer 3 durch seinen Anwender belastet worden ist. Es kann z. B. ermittelt werden, ob der zulässige maximale Messwert erreicht oder überschritten wurde, wie häufig dies geschah und in welcher Größenordnung die Überschreitungen lagen.

Wenn der Hersteller oder Verkäufer die Belastung und insbesondere Überlastung des Messgrößenaufnehmers 3 durch den Anwender kennt, so kann er anhand dieser Erkenntnisse beispielsweise beurteilen, ob Gewährleistungsansprüche des Anwenders wegen eines Defekts des Messgrößenaufnehmers 3 berechtigt sind oder nicht. Wurde der zulässige maximale Messwert überschritten, so könnten Gewährleistungsansprüche zurückgewiesen werden.

Eine andere mögliche Anwendung besteht darin, die noch zu erwartende Lebensdauer und/oder Messgenauigkeit des Messgrößenaufnehmers 3 abzuschätzen. Dies könnte z. B. auch routinemäßig in bestimmten Zeitabständen durchgeführt werden, d. h. es könnte eine regelmäßige Wartung des Messgrößenaufnehmers 3 bei dem Hersteller oder Verkäufer durchgeführt werden. Dadurch, dass Belastungshäufigkeiten und nicht einzelne Messwerte in dem Messgrößenaufnehmer 3 gespeichert werden, ist auch bei beschränktem Speicherplatz eine Speicherung von Belastungsdaten über einen langen Zeitraum wie z. B. 5 oder 10 Jahre möglich. Eine derartige Langzeitspeicherung kann beispielsweise bei einer Langzeitqualitätskontrolle helfen.

Zur Verbindung der Verarbeitungsvorrichtung 2 mit einem nicht in Fig. 1 gezeigten Steuerungssystem können verschiedene Bussysteme eingesetzt werden. So kann beispielsweise der Profibus-DP ("Decentralized Peripherals" bzw. "Dezentrale Peripherie"), der CAN-Bus ("Controller Area Network") oder ein anderer Feldbus verwendet werden. Dabei kann das Schreiben von Daten in den internen Datenspeicher 32 des Messgrößenaufnehmers 3 und das Lesen von Daten aus ihm über verschiedene Zugriffsverfahren und Mechanismen erfolgen. So kann z. B. mit dem Profibus-DP die DP-V1-Funktionalität (azyklischer Datenaustausch) bzw. DP-V2-Funktionalität (isochroner Datenaustausch) genutzt werden und mit dem CAN-Bus die SDO-Funktionalität (Servicedatenobjekte) aus dem auf CAN basierenden Kommunikationsprotokoll CANopen.

Die Fig. 2 zeigt ein Flussdiagramm, das die grundlegenden Schritte eines beispielhaften Verfahrens zum Speichern von Daten in dem internen Datenspeicher 32 des Messgrößenaufnehmers 3 veranschaulicht. In einem Schritt S1 wird bestimmt, in welchen Messwertbereich einer Vielzahl von Messwertbereichen ein Messwert des Messgrößenaufnehmers 3 fällt. In einem Schritt S2 wird ein dem bestimmten Messwertbereich entsprechender Zählwert um einen vorbestimmten Wert verändert. In einem Schritt S3 wird der veränderte Zählwert in einem entsprechenden Speicherbereich von zumindest zwei Speicherbereichen einer Vielzahl von Speicherbereichen des internen Datenspeichers 32 des Messgrößenaufnehmers 3 gespeichert.

Das Verfahren kann weitere in Fig. 2 nicht dargestellte Schritte wie z. B. einen Schritt des Auslesens der in den zumindest zwei Speicherbereichen gespeicherten Zählwerte und einen Schritt des Übertragens der ausgelesenen Zählwerte zu einer Verarbeitungsvorrichtung umfassen.

Alle diese Schritte können im laufenden Prozess ausgeführt werden, d. h. während des Messbetriebs. Die Verwendung der gespeicherten Zählwerte findet hingegen zumeist außerhalb des laufenden Prozesses statt, z. B. bei Service oder Verwaltung.

Die in dem internen Datenspeicher 32 des Messgrößenaufnehmers 3 gespeicherten Zählwerte können dem Messgrößenaufnehmer 3 und damit dem jeweiligen Anwender direkt zugeordnet werden. Dadurch kann es nicht mehr zu Verwechslungen kommen. Es werden keine zusätzlichen Speichermöglichkeiten außerhalb des Messgrößenaufnehmers 3 wie beispielsweise in einer externen Folgeelektronik oder einer globalen Datenbank des Herstellers benötigt. Somit kann der Aufwand für derartige zusätzliche Speichermöglichkeiten gespart werden. Zudem können die Zählwerte nicht durch den Anwender manipuliert werden, da das Schreiben der Zählwerte in den internen Datenspeicher 32 nur mit Hilfe der vorstehend beschriebenen speziellen Funktionalität in der Folgeelektronik möglich ist und der Anwender keinen Zugriff auf selbige hat.

Zusammenfassend bezieht sich die vorliegende Erfindung auf einen Messgrößenaufnehmer 3 mit einem internen Datenspeicher 32, eine Verarbeitungsvorrichtung 2 für einen derartigen Messgrößenaufnehmer 3 und ein Verfahren zum Speichern von Daten in dem internen Datenspeicher 32 eines derartigen Messgrößenaufnehmers 3. Der interne Datenspeicher 32 weist eine Vielzahl von Speicherbereichen auf. In zumindest zwei Speicherbereichen der Vielzahl von Speicherbereichen wird jeweils ein Zählwert, der einer Häufigkeit eines Auftretens von Messwerten in einem bestimmten Messwertbereich entspricht, gespeichert. Somit können Daten bezüglich einer Belastung eines Messgrößenaufnehmers direkt in ihm gespeichert werden und ihm später direkt und zweifelsfrei zugeordnet werden. Dadurch ist eine manipulationssichere Speicherung der Daten möglich und ein Hersteller oder Verkäufer des Messgrößenaufnehmers kann feststellen, ob dieser überlastet worden ist, falls z. B. eine Reklamation durch einen Endanwender erfolgt. Zudem sind Rückschlüsse auf die noch zu erwartende Lebensdauer und/oder Messgenauigkeit des Messgrößenaufnehmers möglich.

## Patentansprüche

1. Verfahren zum Speichern von Daten in einem internen Datenspeicher (32) eines Messgrößenaufnehmers (3), mit einer Vielzahl von Speicherbereichen, wobei zumindest zwei der Speicherbereiche für die Speicherung von Zählwerten vorgesehen sind und das Verfahren die folgenden Schritte umfasst:
Bestimmen (S1), in welchen Messwertbereich einer Vielzahl von Messwertbereichen ein Messwert des Messgrößenaufnehmers (3) fällt;
Verändern (S2) eines dem bestimmten Messwertbereich entsprechenden Zählwerts, der einer Häufigkeit eines Auftretens von Messwerten in dem bestimmten Messwertbereich entspricht, um einen vorbestimmten Wert; und
Speichern (S3) des veränderten Zählwerts in einem entsprechenden Speicherbereich der zumindest zwei für die Speicherung von Zählwerten vorgesehenen Speicherbereiche des internen Datenspeichers (32) des Messgrößenaufnehmers (3).

2. Verfahren nach Anspruch 1, mit den Schritten:
Auslesen der in den zumindest zwei Speicherbereichen gespeicherten Zählwerte; und
Übertragen der ausgelesenen Zählwerte zu einer Verarbeitungsvorrichtung (2).

3. Verfahren nach einem der vorhergehenden Ansprüche, wobei
ein erster Messwertbereich der Vielzahl von Messwertbereichen bei einem Messwert, der 50 % des zulässigen maximalen Messwerts beträgt, beginnt und weitere Messwertbereiche der Vielzahl von Messwertbereichen jeweils bei einem größeren Messwert beginnen als der erste Messwertbereich.

4. Verfahren nach einem der vorhergehenden Ansprüche, wobei
zumindest fünf Messwertbereiche und entsprechende Speicherbereiche vorgesehen sind.

5. Verfahren nach einem der vorhergehenden Ansprüche, wobei
ein erster Messwertbereich der Vielzahl von Messwertbereichen bei einem Messwert, der 50 % des zulässigen maximalen Messwerts beträgt, beginnt, ein zweiter Messwertbereich der Vielzahl von Messwertbereichen bei einem Messwert, der 75 % des zulässigen maximalen Messwerts beträgt, beginnt, ein dritter Messwertbereich der Vielzahl von Messwertbereichen bei einem Messwert, der 100 % des zulässigen maximalen Messwerts beträgt, beginnt, ein vierter Messwertbereich der Vielzahl von Messwertbereichen bei einem Messwert, der 110 % des zulässigen maximalen Messwerts beträgt, beginnt, ein fünfter Messwertbereich der Vielzahl von Messwertbereichen bei einem Messwert, der 120 % des zulässigen maximalen Messwerts beträgt, beginnt und ein sechster Messwertbereich der Vielzahl von Messwertbereichen bei einem Messwert, der 130 % des zulässigen maximalen Messwerts beträgt, beginnt.

6. Verarbeitungsvorrichtung (2) für einen Messgrößenaufnehmer (3) mit einem internen Datenspeicher (32), mit einer Vielzahl von Speicherbereichen, wobei zumindest zwei der Speicherbereiche für die Speicherung von Zählwerten vorgesehen sind und die Verarbeitungsvorrichtung (2) umfasst:
eine Verarbeitungseinrichtung (21) zum Verarbeiten eines elektrischen Messsignals von dem Messgrößenaufnehmer (3) und Erzeugen eines entsprechenden Messwerts; und
eine erste Übertragungseinrichtung (22) zum Übertragen von elektrischen Signalen, wobei
die Verarbeitungseinrichtung (21) dazu eingerichtet ist, zu bestimmen, in welchen Messwertbereich einer Vielzahl von Messwertbereichen der Messwert fällt, einen dem bestimmten Messwertbereich entsprechenden Zählwert, der einer Häufigkeit eines Auftretens von Messwerten in dem bestimmten Messwertbereich entspricht, um einen vorbestimmten Wert zu verändern und den veränderten Zählwert in einem entsprechenden Speicherbereich der zumindest zwei für die Speicherung von Zählwerten vorgesehenen Speicherbereiche des internen Datenspeichers (32) des Messgrößenaufnehmers (3) zu speichern, und
die erste Übertragungseinrichtung (22) dazu eingerichtet ist, den veränderten Zählwert zu dem Messgrößenaufnehmer (3) zu übertragen.

7. Verarbeitungsvorrichtung (2) nach Anspruch 6, wobei
die Verarbeitungseinrichtung (21) dazu eingerichtet ist, die in den zumindest zwei Speicherbereichen gespeicherten Zählwerte auszulesen, und
die erste Übertragungseinrichtung (22) dazu eingerichtet ist, die ausgelesenen Zählwerte zu empfangen.

8. Verarbeitungsvorrichtung (2) nach Anspruch 6 oder 7, wobei
ein erster Messwertbereich der Vielzahl von Messwertbereichen bei einem Messwert, der 50 % des zulässigen maximalen Messwerts beträgt, beginnt und weitere Messwertbereiche der Vielzahl von Messwertbereichen jeweils bei einem größeren Messwert beginnen als der erste Messwertbereich.

9. Verarbeitungsvorrichtung (2) nach einem der Ansprüche 6 bis 8, wobei
zumindest fünf Messwertbereiche und entsprechende Speicherbereiche vorgesehen sind.

10. Verarbeitungsvorrichtung (2) nach einem der Ansprüche 6 bis 9, wobei
ein erster Messwertbereich der Vielzahl von Messwertbereichen bei einem Messwert, der 50 % des zulässigen maximalen Messwerts beträgt, beginnt, ein zweiter Messwertbereich der Vielzahl von Messwertbereichen bei einem Messwert, der 75 % des zulässigen maximalen Messwerts beträgt, beginnt, ein dritter Messwertbereich der Vielzahl von Messwertbereichen bei einem Messwert, der 100 % des zulässigen maximalen Messwerts beträgt, beginnt, ein vierter Messwertbereich der Vielzahl von Messwertbereichen bei einem Messwert, der 110 % des zulässigen maximalen Messwerts beträgt, beginnt, ein fünfter Messwertbereich der Vielzahl von Messwertbereichen bei einem Messwert, der 120 % des zulässigen maximalen Messwerts beträgt, beginnt und ein sechster Messwertbereich der Vielzahl von Messwertbereichen bei einem Messwert, der 130 % des zulässigen maximalen Messwerts beträgt, beginnt.

11. Messsystem (1) mit einer Verarbeitungsvorrichtung (2) nach einem der Ansprüche 6 bis 10 und einem Messgrößenaufnehmer (3), wobei der Messgrößenaufnehmer (3) umfasst:
eine Aufnehmereinrichtung (31) zum Erzeugen eines einem Wert einer physikalischen Größe entsprechenden elektrischen Messsignals; und
einen internen Datenspeicher (32) zum Speichern von Daten,
wobei der interne Datenspeicher (32) eine Vielzahl von Speicherbereichen, von denen zumindest zwei für die Speicherung von Zählwerten vorgesehen sind, aufweist und der interne Datenspeicher (32) dazu eingerichtet ist, in den zumindest zwei für die Speicherung von Zählwerten vorgesehenen Speicherbereichen jeweils einen Zählwert, der einer Häufigkeit eines Auftretens von Messwerten in einem bestimmten Messwertbereich entspricht, zu speichern,
wobei ein Verfahren nach einem der Ansprüche 1 bis 5 zum Zugriff auf den internen Datenspeicher (32) des Messgrößenaufnehmers (3) dient.

12. Messsystem (1) nach Anspruch 11, wobei
der Messgrößenaufnehmer (3) eine zweite Übertragungseinrichtung (33) zum Übertragen von elektrischen Signalen, die dazu eingerichtet ist, die in den zumindest zwei Speicherbereichen gespeicherten Zählwerte zu der Verarbeitungsvorrichtung (2) zu übertragen, aufweist.

13. Messsystem (1) nach Anspruch 11 oder 12, wobei
in dem Messgrößenaufnehmer (3) ein erster Messwertbereich der Vielzahl von Messwertbereichen bei einem Messwert, der 50 % des zulässigen maximalen Messwerts beträgt, beginnt und weitere Messwertbereiche der Vielzahl von Messwertbereichen jeweils bei einem größeren Messwert beginnen als der erste Messwertbereich.

14. Messsystem (1) nach einem der Ansprüche 11 bis 13, wobei
in dem Messgrößenaufnehmer (3) zumindest fünf Messwertbereiche und entsprechende Speicherbereiche vorgesehen sind.

15. Messsystem (1) nach einem der Ansprüche 11 bis 14, wobei
in dem Messgrößenaufnehmer (3) ein erster Messwertbereich der Vielzahl von Messwertbereichen bei einem Messwert, der 50 % des zulässigen maximalen Messwerts beträgt, beginnt, ein zweiter Messwertbereich der Vielzahl von Messwertbereichen bei einem Messwert, der 75 % des zulässigen maximalen Messwerts beträgt, beginnt, ein dritter Messwertbereich der Vielzahl von Messwertbereichen bei einem Messwert, der 100 % des zulässigen maximalen Messwerts beträgt, beginnt, ein vierter Messwertbereich der Vielzahl von Messwertbereichen bei einem Messwert, der 110 % des zulässigen maximalen Messwerts beträgt, beginnt, ein fünfter Messwertbereich der Vielzahl von Messwertbereichen bei einem Messwert, der 120 % des zulässigen maximalen Messwerts beträgt, beginnt und ein sechster Messwertbereich der Vielzahl von Messwertbereichen bei einem Messwert, der 130 % des zulässigen maximalen Messwerts beträgt, beginnt.

## Claims

1. A method for storing data in an internal data memory (32) of a measurement transducer (3) comprising a plurality of memory areas, wherein at least two of the memory areas are provided for storing count values and the method comprises the following steps:
determining (S1) into which of a plurality of ranges a value measured by the measurement transducer (3) falls;
changing (S2), by a predetermined value, a count value for the determined range, corresponding to a frequency with which measured values occur in the determined range; and
storing (S3) the changed count value in a respective memory area of the at least two memory areas of the internal data memory (32) of the measurement transducer (3) provided for storing count values.

2. The method according to claim 1, comprising the steps of:
retrieving the count values stored in the at least two memory areas; and
transmitting the retrieved count values to a processing device (2).

3. The method according to any one of the preceding claims, wherein
a first range of the plurality of ranges begins at a value equal to 50 % of the maximum permitted value, and further ranges of the plurality of ranges each begin at a higher value than the first range.

4. The method according to any one of the preceding claims, wherein
at least five ranges and respective memory areas are provided.

5. The method according to any one of the preceding claims, wherein
a first range of the plurality of ranges begins at a value equal to 50 % of the maximum permitted value, a second range of the plurality of ranges begins at a value equal to 75 % of the maximum permitted value, a third range of the plurality of ranges begins at a value equal to 100 % of the maximum permitted value, a fourth range of the plurality of ranges begins at a value equal to 110 % of the maximum permitted value, a fifth range of the plurality of ranges begins at a value equal to 120 % of the maximum permitted value, and a sixth range of the plurality of ranges begins at a value equal to 130 % of the maximum permitted value.

6. A processing device (2) for a measurement transducer (3) having an internal data memory (32) comprising a plurality of memory areas, wherein at least two of the memory areas are provided for storing count values and said processing device (2) comprises:
a processor unit (21) for processing an electrical signal from the measurement transducer (3) and generating a corresponding measured value; and
a first transmission unit (22) for transmitting electrical signals, wherein
the processor unit (21) is configured to determine into which of a plurality of ranges the measured value falls, to change, by a predetermined value, a count value for the determined range, corresponding to a frequency with which measured values occur in the determined range, and to store the changed count value in a respective memory area of the at least two memory areas of the internal data memory (32) of the measurement transducer (3) provided for storing count values, and
the first transmission unit (22) is configured to transmit the changed count value to the measurement transducer (3).

7. The processing device (2) according to claim 6, wherein
the processor unit (21) is configured to retrieve the count values stored in the at least two memory areas, and
the first transmission unit (22) is configured to receive the retrieved count values.

8. The processing device (2) according to claim 6 or 7, wherein
a first range of the plurality of ranges begins at a value equal to 50 % of the maximum permitted value, and further ranges of the plurality of ranges each begin at a higher value than the first range.

9. The processing device (2) according to any one of claims 6 to 8, wherein
at least five ranges and respective memory areas are provided.

10. The processing device (2) according to any one of claims 6 to 9, wherein
a first range of the plurality of ranges begins at a value equal to 50 % of the maximum permitted value, a second range of the plurality of ranges begins at a value equal to 75 % of the maximum permitted value, a third range of the plurality of ranges begins at a value equal to 100 % of the maximum permitted value, a fourth range of the plurality of ranges begins at a value equal to 110 % of the maximum permitted value, a fifth range of the plurality of ranges begins at a value equal to 120 % of the maximum permitted value, and a sixth range of the plurality of ranges begins at a value equal to 130 % of the maximum permitted value.

11. A measuring system (1) comprising a processing device (2) according to any one of claims 6 to 10 and a measurement transducer (3), wherein the measurement transducer (3) comprises:
a transducer device (31) for generating an electrical signal corresponding to a value of a physical variable; and
an internal data memory (32) for storing data,
wherein the internal data memory (32) has a plurality of memory areas of which at least two are provided for storing count values, and the internal data memory (32) is configured to store a respective count value, corresponding to a frequency with which measured values occur in a determined range, in each of said at least two memory areas provided for storing count values,
wherein a method according to any one claims 1 to 5 is used to access the internal data memory (32) of the measurement transducer (3).

12. The measuring system (1) according to claim 11, wherein
the measurement transducer (3) has a second transmission unit (33) for transmitting electrical signals, which is configured to transmit the count values stored in the at least two memory areas to the processing device (2).

13. The measuring system (1) according to claim 11 or 12, wherein
a first range of the plurality of ranges begins in the measurement transducer (3) at a value equal to 50 % of the maximum permitted value, and further ranges of the plurality of ranges each begin at a higher value than the first range.

14. The measuring system (1) according to any one of claims 11 to 13, wherein
at least five ranges and respective memory areas are provided in the measurement transducer (3).

15. The measuring system (1) according to any one of claims 11 to 14, wherein
a first range of the plurality of ranges begins in the measurement transducer (3) at a value equal to 50 % of the maximum permitted value, a second range of the plurality of ranges begins at a value equal to 75 % of the maximum permitted value, a third range of the plurality of ranges begins at a value equal to 100 % of the maximum permitted value, a fourth range of the plurality of ranges begins at a value equal to 110 % of the maximum permitted value, a fifth range of the plurality of ranges begins at a value equal to 120 % of the maximum permitted value, and a sixth range of the plurality of ranges begins at a value equal to 130 % of the maximum permitted value.

## Revendications

1. Procédé de stockage de données dans une mémoire de données interne (32) d'un capteur de grandeurs de mesure (3) disposant d'une pluralité de zones de mémoire, dans lequel au moins deux des zones de mémoire sont prévues pour le stockage de valeurs de comptage et dans lequel le procédé comprend les étapes suivantes:
déterminer (S1) dans quelle plage de valeurs de mesure parmi une pluralité de plages de valeurs de mesure, une valeur de mesure du capteur de grandeurs de mesure (3) se trouve;
modifier (S2) une valeur de comptage correspondant à la plage de valeurs de mesure déterminée, la valeur de comptage correspondant à une fréquence d'occurrence de valeurs de mesure à l'intérieur de la plage de valeurs de mesure déterminée, en une valeur prédéterminée; et
stocker (S3) la valeur de comptage modifiée dans une zone de mémoire correspondante parmi les au moins deux zones de mémoire de la mémoire de données interne (32) du capteur de grandeurs de mesure (3) qui sont prévues pour le stockage des valeurs de comptage.

2. Procédé selon la revendication 1, ayant les étapes:
extraire les valeurs de comptage stockées dans les au moins deux zones de mémoire; et
transmettre les valeurs de comptage extraites vers un dispositif de traitement (2).

3. Procédé selon l'une des revendications précédentes, dans lequel
une première plage de valeurs de mesure parmi la pluralité de plages de valeurs de mesure commence pour une valeur de mesure qui s'élève à 50 % de la valeur de mesure maximale admissible, et d'autres plages de valeurs de mesure parmi la pluralité de plages de valeurs de mesure commencent respectivement pour une plus grande valeur de mesure que celle de la première plage de valeurs de mesure.

4. Procédé selon l'une des revendications précédentes, dans lequel
au moins cinq plages de valeurs de mesure et des zones de mémoire correspondantes sont prévues.

5. Procédé selon l'une des revendications précédentes, dans lequel
une première plage de valeurs de mesure parmi la pluralité de plages de valeurs de mesure commence pour une valeur de mesure qui s'élève à 50 % de la valeur de mesure maximale admissible, une deuxième plage de valeurs de mesure parmi la pluralité de plages de valeurs de mesure commence pour une valeur de mesure qui s'élève à 75 % de la valeur de mesure maximale admissible, une troisième plage de valeurs de mesure parmi la pluralité de plages de valeurs de mesure commence pour une valeur de mesure qui s'élève à 100 % de la valeur de mesure maximale admissible, une quatrième plage de valeurs de mesure parmi la pluralité de plages de valeurs de mesure commence pour une valeur de mesure qui s'élève à 110 % de la valeur de mesure maximale admissible, une cinquième plage de valeurs de mesure parmi la pluralité de plages de valeurs de mesure commence pour une valeur de mesure qui s'élève à 120 % de la valeur de mesure maximale admissible, et une sixième plage de valeurs de mesure parmi la pluralité de plages de valeurs de mesure commence pour une valeur de mesure qui s'élève à 130 % de la valeur de mesure maximale admissible.

6. Dispositif de traitement (2) pour un capteur de grandeurs de mesure (3) ayant une mémoire de données interne (32), la mémoire de données interne disposant d'une pluralité de zones de mémoire, dans lequel au moins deux des zones de mémoire sont prévues pour le stockage de valeurs de comptage et dans lequel le dispositif de traitement (2) comprend:
un moyen de traitement (21) pour traiter un signal de mesure électrique du capteur de grandeurs de mesure (3) et obtenir une valeur de mesure correspondante; et
un premier moyen de transmission (22) pour transmettre des signaux électriques, dans lequel
le moyen de traitement (21) est adapté pour déterminer dans quelle plage de valeurs de mesure parmi une pluralité de plages de valeurs de mesure la valeur de mesure se trouve, et pour modifier une valeur de comptage correspondant à la plage de valeurs de mesure déterminée, la valeur de comptage correspondant à une fréquence d'occurrence de valeurs de mesure à l'intérieur de la plage de valeurs de mesure déterminée, en une valeur prédéterminée, et pour stocker la valeur de comptage modifiée dans une zone de mémoire correspondante parmi les au moins deux zones de mémoire de la mémoire de données interne (32) du capteur de grandeurs de mesure (3) qui sont prévues pour le stockage des valeurs de comptage, et
le premier moyen de transmission (22) est adapté pour transmettre la valeur de comptage modifiée vers le capteur de grandeurs de mesure (3).

7. Dispositif de traitement (2) selon la revendication 6, dans lequel
le moyen de traitement (21) est adapté pour extraire les valeurs de comptage stockées dans les au moins deux zones de mémoire; et
le premier moyen de transmission (22) est adapté pour recevoir les valeurs de comptage extraites.

8. Dispositif de traitement (2) selon la revendication 6 ou 7, dans lequel
une première plage de valeurs de mesure parmi la pluralité de plages de valeurs de mesure commence pour une valeur de mesure qui s'élève à 50 % de la valeur de mesure maximale admissible, et d'autres plages de valeurs de mesure parmi la pluralité de plages de valeurs de mesure commencent respectivement pour une plus grande valeur de mesure que celle de la première plage de valeurs de mesure.

9. Dispositif de traitement (2) selon l'une des revendications 6 à 8, dans lequel
au moins cinq plages de valeurs de mesure et des zones de mémoire correspondantes sont prévues.

10. Dispositif de traitement (2) selon l'une des revendications 6 à 9, dans lequel
une première plage de valeurs de mesure parmi la pluralité de plages de valeurs de mesure commence pour une valeur de mesure qui s'élève à 50 % de la valeur de mesure maximale admissible, une deuxième plage de valeurs de mesure parmi la pluralité de plages de valeurs de mesure commence pour une valeur de mesure qui s'élève à 75 % de la valeur de mesure maximale admissible, une troisième plage de valeurs de mesure parmi la pluralité de plages de valeurs de mesure commence pour une valeur de mesure qui s'élève à 100 % de la valeur de mesure maximale admissible, une quatrième plage de valeurs de mesure parmi la pluralité de plages de valeurs de mesure commence pour une valeur de mesure qui s'élève à 110 % de la valeur de mesure maximale admissible, une cinquième plage de valeurs de mesure parmi la pluralité de plages de valeurs de mesure commence pour une valeur de mesure qui s'élève à 120 % de la valeur de mesure maximale admissible, et une sixième plage de valeurs de mesure parmi la pluralité de plages de valeurs de mesure commence pour une valeur de mesure qui s'élève à 130 % de la valeur de mesure maximale admissible.

11. Système de mesure (1) ayant un dispositif de traitement (2) selon l'une des revendications 6 à 10 et ayant un capteur de grandeurs de mesure (3), dans lequel le capteur de grandeurs de mesure (3) comprend:
un moyen de captage (31) pour obtenir un signal de mesure électrique correspondant à une valeur d'une grandeur physique; et
une mémoire de données interne (32) pour stocker des données,
dans lequel la mémoire de données interne (32) comprend une pluralité de zones de mémoire dont au moins deux sont prévues pour le stockage des valeurs de comptage, et dans lequel la mémoire de données interne (32) est adaptée pour stocker une valeur de comptage respectivement dans les au moins deux zones de mémoire prévues pour le stockage des valeurs de comptage, la valeur de comptage correspondant à une fréquence d'occurrence de valeurs de mesure à l'intérieur d'une plage de valeurs de mesure déterminée,
dans lequel un procédé selon l'une des revendications 1 à 5 permet l'accès à la mémoire de données interne (32) du capteur de grandeurs de mesure (3).

12. Système de mesure (1) selon la revendication 11, dans lequel
le capteur de grandeurs de mesure (3) comprend un deuxième moyen de transmission (33) pour transmettre des signaux électriques, le deuxième moyen de transmission (33) étant adapté pour transmettre les valeurs de comptage stockées dans les au moins deux zones de mémoire vers le dispositif de traitement (2).

13. Système de mesure (1) selon la revendication 11 ou 12, dans lequel
dans le capteur de grandeurs de mesure (3), une première plage de valeurs de mesure parmi la pluralité de plages de valeurs de mesure commence pour une valeur de mesure qui s'élève à 50 % de la valeur de mesure maximale admissible, et d'autres plages de valeurs de mesure parmi la pluralité de plages de valeurs de mesure commencent respectivement pour une plus grande valeur de mesure que celle de la première plage de valeurs de mesure.

14. Système de mesure (1) selon l'une des revendications 11 à 13, dans lequel
dans le capteur de grandeurs de mesure (3), au moins cinq plages de valeurs de mesure et des zones de mémoire correspondantes sont prévues.

15. Système de mesure (1) selon l'une des revendications 11 à 14, dans lequel
dans le capteur de grandeurs de mesure (3), une première plage de valeurs de mesure parmi la pluralité de plages de valeurs de mesure commence pour une valeur de mesure qui s'élève à 50 % de la valeur de mesure maximale admissible, une deuxième plage de valeurs de mesure parmi la pluralité de plages de valeurs de mesure commence pour une valeur de mesure qui s'élève à 75 % de la valeur de mesure maximale admissible, une troisième plage de valeurs de mesure parmi la pluralité de plages de valeurs de mesure commence pour une valeur de mesure qui s'élève à 100 % de la valeur de mesure maximale admissible, une quatrième plage de valeurs de mesure parmi la pluralité de plages de valeurs de mesure commence pour une valeur de mesure qui s'élève à 110 % de la valeur de mesure maximale admissible, une cinquième plage de valeurs de mesure parmi la pluralité de plages de valeurs de mesure commence pour une valeur de mesure qui s'élève à 120 % de la valeur de mesure maximale admissible, et une sixième plage de valeurs de mesure parmi la pluralité de plages de valeurs de mesure commence pour une valeur de mesure qui s'élève à 130 % de la valeur de mesure maximale admissible.
